# EUROPÄISCHE PATENTSCHRIFT

(11) **EP 2 295 273 B1**
(45) Veröffentlichungstag und Bekanntmachung des Hinweises auf die Patenterteilung: **09.11.2011**
(21) Anmeldenummer: 09011601.3
(22) Anmeldetag: 10.09.2009
(51) Int. Cl.: B60K 5/10, B64F 1/22

(54) **Flughafen-Vorfeldfahrzeug zum Schleppen von Fahrzeugen**
Airport apron vehicle for towing vehicles
Véhicule d'aire de stationnement d'aéroport pour le remorquage de véhicules

(43) Veröffentlichungstag der Anmeldung: 16.03.2011
(73) Patentinhaber: Trepel Airport Equipment GmbH, 97941 Tauberbischofsheim (DE)
(72) Erfinder: Veit, Janik, 97850 Grossrinderfeld (DE)
(74) Vertreter: Quermann, Helmut

(56) Entgegenhaltungen:
- EP-A- 0 335 611
- WO-A-2005/077734
- FR-A- 922 107

## Beschreibung

Die Erfindung betrifft ein Flughafen-Vorfeldfahrzeug zum Schleppen von Fahrzeugen, insbesondere Stangenschlepper für Flugzeuge, mit einem Chassis, einer Motor-Getriebe-Kombination, im Bereich beider Seiten des Chassis angeordneten Vorder- und Hinterrädern, Radaufhängungen für die Räder sowie einer am Chassis befestigten Anhängevorrichtung für das zu schleppende Fahrzeug.

Auf dem Vorfeld von Flughäfen finden die unterschiedlichsten Fahrzeuge Verwendung. Es handelt sich beispielsweise um Stangenschlepper für Flugzeuge. Diese Stangenschlepper sind Kraftfahrzeuge, die eine wesentlich größere Masse als die Eigenmasse schleppen, schieben und abbremsen müssen. Der Einfachheit halber wird nachfolgend nur der Begriff des Schleppens für diese unterschiedlichen Funktionen benutzt. Zum Schleppen des Flugzeuges wird eine Schleppstange mit dem Stangenschlepper und dem Bugfahrwerk des Flugzeugs verbunden.

Großraumflugzeuge besitzen ein Startgewicht von mehr als 350 t. Demzufolge sind die Stangenschlepper schwergewichtig zu dimensionieren, beispielsweise besitzt der Stangenschlepper ein Gewicht von mehr als 35 t. Dieses Gewicht resultiert aus dem hohen Gewicht des Chassis, ggf. auch aus Zusatzgewichten, die auf das Chassis aufgelegt werden.

Diese grundsätzlichen Anforderungen an Flugzeugschlepper aufgrund deren hohen Eigengewichts bedingen, dass insbesondere die Motor-Getriebe-Kombination zum Antreiben des Stangenschleppers, die in einem zentralen Bereich des Stangenschleppers angeordnet ist, nur recht schwer zu erreichen ist, insbesondere bei durchzuführender Wartung, Reparatur oder Ersatz von Teilen der Motor-Getriebe-Kombination.

Ein Flughafenvorfeldfahrzeug der eingangs genannten Art, das als Stangenschlepper für Flugzeuge ausgebildet ist, ist aus der EP 0 335 611 A1 bekannt..

Flughafen-Vorfeldfahrzeuge werden auch zum Schleppen von sonstigen Fahrzeugen auf dem Flughafenvorfeld eingesetzt, beispielsweise von Fahrzeugen, die mit Gütern beladen sind, die im Bereich des Flughafens zu transportieren sind, insbesondere Ladegut, das zu einem Flugzeug bzw. von einem Flugzeug zu verbringen ist.

In der WO 2005/077734 A1 ist ein Kraftfahrzeug mit einer Vielzahl beidseitig des Kraftfahrzeuges angeordneten Rädern beschrieben. In einem Hilfsrahmen des Fahrzeuges ist eine Motor-Getriebe-Kombination gelagert, wobei der Hilfsrahmen bezüglich des Chassis heb- und senkbar ist. In einer abgesenkten Stellung des Hilfsrahmens ist die Motor-Getriebe-Kombination zwischen seitlichen Wangen des Chassis angeordnet und es ist der Hilfsrahmen im Chassis in Zentriereinrichtungen gelagert, die von unten in den Hilfsrahmen eingreifen. Zur Durchführung von Wartungs- und Reparaturarbeiten wird der Hilfsrahmen mit der Motor-Getriebe-Kombination vollständig aus dem Chassis heraus nach oben verfahren und außerhalb des Fahrzeuges abgestellt.

Aufgabe der vorliegenden Erfindung ist es, ein Flughafen-Vorfeldfahrzeug der eingangs genannten Art so weiterzubilden, dass bei einfacher Gestaltung dieses Fahrzeuges eine einfache, schnelle und unkomplizierte Wartung, Reparatur oder Ersatz zumindest der Motor-Getriebe-Kombination des Fahrzeugs gewährleistet ist.

Die Erfindung schlägt hierzu vor, dass im Chassis ein Hilfsrahmen gelagert ist, in dem die Motor-Getriebe-Kombination gelagert ist, wobei der Hilfsrahmen bezüglich des Chassis heb- und senkbar ist, aus einer abgesenkten Stellung, in der die Motor-Getriebe-Kombination zwischen seitlichen Wangen des Chassis angeordnet ist und einer angehobenen Stellung, in der die Motor-Getriebe-Kombination teilweise oberhalb des oberen Niveaus der seitlichen Wangen des Chassis angeordnet ist, wobei der Hilfsrahmen in vertikal angeordneten Führungen im Chassis relativ zu diesem beweglich ist, zum Heben und Senken des Hilfsrahmens zwischen einer vollständig abgesenkten und einer vollständig angehobenen Position..

Die Angaben heb- und senkbar, seitlich und auch weitere Angaben, wie vorne, hinten beziehen sich auf die Orientierung eines Fahrzeuges bei Fahrt in Vorwärtsrichtung und Anordnung des Fahrzeuges auf einem horizontalen Untergrund.

Bei dem erfindungsgemäßen Flughafen-Vorfeldfahrzeug ist demgemäß zwischen den seitlichen Wangen des Chassis, somit den linken und rechten Wangen des Chassis, ein Raum zur Aufnahme des Hilfsrahmens gebildet. Dieser Hilfsrahmen ist deshalb als solcher bezeichnet, weil das Chassis in seiner Funktion als Rahmen des Flughafen-Vorfeldfahrzeugs der Anordnung eines weiteren Rahmens - Hilfsrahmens - dient, dem, im Unterschied zu der üblichen Lagerung einer Motor-Getriebe-Kombination im Chassis, die Aufgabe zukommt, nunmehr die Motor-Getriebe-Kombination aufzunehmen. Dadurch, dass der Hilfsrahmen bezüglich des Chassis heb- und senkbar ist, kann die Motor-Getriebe-Kombination aus dem nur unzureichend zugänglichen Bereich zwischen den Wangen soweit angehoben werden, dass die für Wartung, Reparatur und Ersatz wesentlichen Bauteile der Motor-Getriebe-Kombination frei zugänglich sind. Wartungsarbeiten können somit unkompliziert an der angehobenen Motor-Getriebe-Kombination vorgenommen werden.

Zur Durchführung der Arbeiten an der Motor-Getriebe-Kombination ist es nur erforderlich, die mit der Motor-Getriebe-Kombination verbundenen Funktionsteile des Flughafen-Vorfeldfahrzeugs zu trennen, insbesondere den vom Getriebe abgehenden Antriebsstrang vom Getriebe zu trennen, ggf. auch Aggregate betreffend Verbrennungsluftzufuhr und Abgasabfuhr.

Die seitlichen Wangen des Chassis sind beispielsweise als vertikal angeordnete Platten ausgebildet, die im Raum zwischen den linken Rädern und den rechten Rädern des Flughafen-Vorfeldfahrzeugs angeordnet sind und soweit beabstandet sind, dass zwischen diesen ausreichend Platz zur Aufnahme des Hilfsrahmens verbleibt. Diese seitlichen Wangen erstrecken sich zweckmäßig von einer Fahrerkabine bis zum hinteren Ende des Flughafen-Vorfeldfahrzeugs. Die seit lichen Wangen sind unten mittels Platten verbunden, womit diese Platten einen Bodenbereich des Flughafen-Vorfeldfahrzeugs darstellen.

Erfindungsgemäß ist der Hilfsrahmen in vertikal angeordneten Führungen im Chassis relativ zu diesem beweglich, zum Heben und Senken des Hilfsrahmens. Diese Führungen gewährleisten, dass der Hilfsrahmen präzise aus seiner vollständig abgesenkten Position, in der er auf dem Chassis aufliegt, in seine vollständig angehobene Position und entgegengesetzt bewegt werden kann. Zweckmäßig sind die Führungen im vorderen und im hinteren Bereich des Hilfsrahmens angeordnet. Durch diesen großen Abstand der Führungen ist eine besonders kippstabile Lagerung des Hilfsrahmens im Chassis gewährleistet.

Gemäß einer besonderen Ausführungsform der Erfindung weist das Flughafen-Vorfeldfahrzeug Mittel zum Heben und Senken des Hilfsrahmens relativ zum Chassis auf. Es würde im Sinne der Erfindung zwar grundsätzlich ausreichen, den Hilfsrahmen durch externe Mittel zu heben und zu senken, beispielsweise mittels eines Krans, der in einer Wartungshalle angeordnet ist. Der Vorteil der Ausstattung des Flughafen-Vorfeldfahrzeugs mit Mitteln zum Heben und Senken des Hilfsrahmens ist darin zu sehen, dass das Heben und Senken des Hilfsrahmens unabhängig vom Ort, an dem sich das Flughafen-Vorfeldfahrzeug befindet, erfolgen kann.

Unter dem Aspekt, dass zur Durchführung der Arbeiten der Motor-Getriebe-Kombination der Hilfsrahmen anzuheben ist und demzufolge Aggregate vor dem Abheben des Hitfsrahinens von der Motor-Getriebe-Kombination zu trennen sind, wird es als besonders vorteilhaft angesehen, wenn die Mittel zum Heben und Senken des Hilfsrahmens mittels eines fahrzeugeigenen, batteriebetriebenen Aggregats wirksam sind.

Die Mittel zum Heben und Senken des Hilfsrahmens relativ zum Chassis sind insbesondere als Hydraulikzylinder ausgebildet. Es kann somit das bei dem Flughafen-Vorfeldfahrzeug zum Heben ohnehin vorhandene Hydrauliksystem verwendet werden, das beispielsweise für eine hydropneumatische Federung des Fahrwerks des Flughafen-Vorfeldfahrzeugs Verwendung findet.

Die Mittel zum Heben und Senken des Hilfsrahmens relativ zum Chassis sind insbesondere im vorderen und hinteren Bereich des Hilfsrahmens angeordnet. Insbesondere ist vorne, in der Mitte des Hilfsrahmens, ein Mittel zum Heben und Senken des Hilfsrahmens und es sind im hinteren Bereich, beidseitig des Hilfsrahmens, zwei Mittel zum Heben und Senken des Hilfsrahmens vorgesehen. Der im Chassis geführte Hilfsrahmen ist somit mittels dreier, an unterschiedlichen Orten angeordneter Mittel zum Heben und Senken des Hilfsrahmens, insbesondere mittels dreier Hydraulikzylinder heb- und senkbar.

Vorzugsweise sind Arretiermittel im Chassis oder in Hilfsrahmen gelagert, die in angehobener Position des Hilfsrahmens in Eingriff bringbar sind und den Hilfsrahmen zum Chassis vertikal festlegen. In einfachster Art und Weise ist es somit nur erforderlich, den Hilfsrahmen auf die gewünschte Arbeitshöhe anzuheben, mittels eines externen Hubmittels oder eines fahrzeugeigenen Hubmittels und in dieser angehobenen Position des Hilfsrahmens mehrere Klinken oder Zapfen aus dem Hilfsrahmen oder dem Chassis auszufahren, die ein Absenken des Hilfsrahmens bezüglich des Chassis verthindem.

Unter dem Aspekt des Überführens des Hilfsrahmens von seiner angehobenen Stellung in seine vollständig abgesenkte Stellung wird es als vorteilhaft angesehen, wenn Zentriermittel zum Zentrieren des Hilfsrahmens beim Überführen des Hilfsrahmens in dessen vollständig abgesetzte Position vorgesehen sind. Diese Zentriemnittel sind im Chassis oder im Hilfsrahmen gelagert. Die Zentriermittel sind als mindestens ein vertikal ausgerichteter Zentrierstift ausgebildet, der beim Überführen des Hilfsrahmens in dessen vollständig abgesenkte Position in eine Aufnahme eingreift, beispielsweise, bei Lagerung des Zentrierstiftes im Chassis, in eine Aufnahme im Hilfsrahmen eingreift.

In der abgesenkten Stellung ist der Hilfsrahmen vorzugsweise kippstabil im Chassis gelagert. Dies vor dem Hintergrund, dass Abtriebsmomente der Motor-Getriebe-Kombination, die in die Räder eingeleitet werden, über die Lagerung des Hilfsrahmens im Chassis aufgefangen werden müssen.

Die kippstabile Lagerung des Hilfsrahmens in dessen abgesenkter Stellung im Chassis stellt sicher, dass der Hilfsrahmen auch im Betrieb des Flughafen-Vorfeldfahrzeugs und somit beim Fahren, insbesondere beim Schleppen eines Flugzeugs seine Position relativ zum Chassis beibehält. Unter diesem Aspekt sind vorzugsweise Mittel zum Verbinden von Hilfsrahmen und Chassis in der abgesenkten Stellung des Hilfsrahmens vorgesehen.

Der Hilfsrahmen ist bevorzugt konstruktiv einfach ausgebildet. Hierzu ist er durch Längs-, Quer- und Vertikalstreben gebildet. Diese Strebenkonstruktion ermöglicht eine gute Zugänglichkeit der vom Hilfsrahmen aufgenommenen Motor-Getriebe-Kombination.

Je nach den Anforderungen kann der Hilfsrahmen nicht nur die Motor-Getriebe-Kombination aufnehmen, sondern auch weitere Aggregate des Flughafen-Vorfeldfahrzeugs, die in näherem funktionellen Bezug zur Motor-Getriebe-Kombination zu sehen sind. So nimmt der Hilfsrahmen ggf. zusätzlich eine Kühlvorrichtung für den Motor und/oder eine Kühlvorrichtung für das Getriebe und/oder einen Tank für Hydrauliköl auf.

Bei dem Flughafen-Vorfeldfahrzeug sind vorzugsweise im Chassis Kardanwellen zum Antreiben der Vorder und Hinterräder gelagert. Aufgrund der Anordnung der Motor-Getriebe-Kombination im Hilfsrahmen erfolgt somit vor dem Anheben des Hilfsrahmens und damit der Motor-Getriebe-Kombination eine Trennung des Antriebsstrangs zwischen dem Getriebe und den Kardanwellen.

Bei der Motor-Getriebe-Kombination kann der Motor auf unterschiedlichste Art und Weise gestaltet sein. Es wird als besonders vorteilhaft angesehen, wenn es sich bei dem Motor um eine Brennkraftmaschine handelt. Insbesondere handelt es sich um einen Dieselmotor. Es könnte sich durchaus auch um einen Elektromotor handeln, der über eine im Chassis gelagerte Batterie angetrieben wird, die ggf. mittels eines Generators aufladbar ist, der seinerseits mittels einer im Chassis gelagerten Brennkraftmaschine angetrieben wird. Auch ist ein Hybridmotor denkbar.

Weitere Merkmale der Erfindung sind in den Unteransprüchen, der Beschreibung der Zeichnung sowie der Zeichnung selbst offenbart, wobei bemerkt wird, dass alle Merkmale und Einzelmerkmale erfindungswesentlich sind.

Die Erfindung wird anhand eines in der Zeichnung dargestellten bevorzugten Ausführungsbeispiels näher erläutert. Es zeigt:
- Figur 1: eine Ansicht des erfindungsgemäßen, als Stangenschlep- per ausgebildeten Flughafen-Vorfeldfahrzeugs bei vollstän- dig abgesenktem Hilfsrahmen, in einer räumlichen Ansicht, schräg von oben und hinten gesehen,
- Figur 2: die Ansicht des Fahrzeugs gemäß Fig. 1, bei vollständig angehobenem Hilfsrahmen,

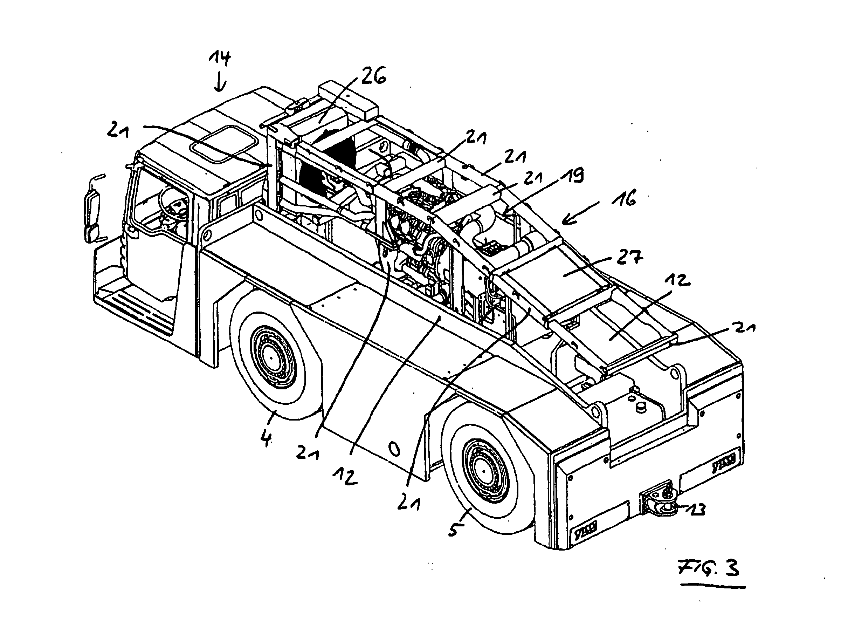

- Figur 3: die Ansicht des Fahrzeugs gemäß Fig. 2, bei von dem Hilfs- rahmen abgenommenem Abdeckgitter,

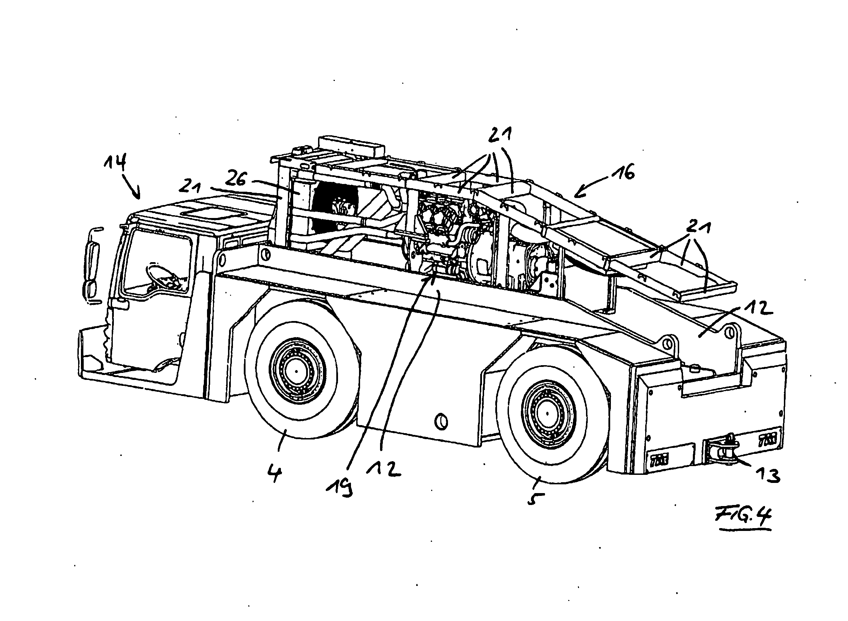

- Figur 4: das Fahrzeug gemäß Fig. 3 in einer Ansicht mehr von der Seite gesehen,
- Figur 5: das Fahrzeug mit abgesenktem Hilfsrahmen, von der Seite gesehen,
- Figur 6: eine Ansicht des in Fig. 5 gezeigten Fahrzeugs, teilweise in einem Vertikalschnitt, geschnitten zwischen der linken, seit- lichen Wange des Chassis und den Kardanwellen,

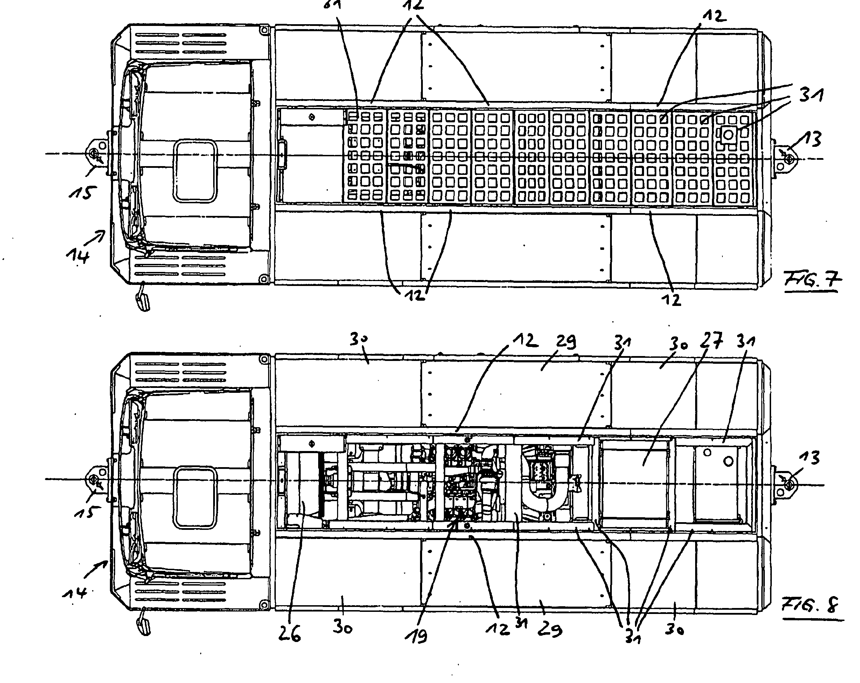

- Figur 7: eine Draufsicht des Fahrzeugs, bei abgesenktem Hilfsrah- men,
- Figur 8: eine Ansicht des Fahrzeugs gemäß Fig. 7, bei abgenom- menem Abdeckgitter,
- Figur 9: eine Seitenansicht des Fahrzeugs bei vollständig angeho- benem Hilfsrahmen,
- Figur 10: eine Ansicht des Fahrzeugs gemäß Fig. 9, teilweise ge- schnitten, in einer vertikalen Schnittebene zwischen der lin- ken Seitenwange des Chassis und den Kardanwellen.

Das als Stangenschlepper 1 zum Schleppen eines Flugzeuges, insbesondere eines Großflugzeuges ausgebildete Flughafen-Vorfeldfahrzeug, besitzt ein Chassis 2, in dem die Radaufhängungen 3 für zwei in den beiden Seiten des Chassis 2 gelagerte Vorderräder 4 und Hinterräder 5 gelagert sind. Die Räder werden angetrieben über eine vordere Kardanwelle 6 und eine hintere Kardanwelle 7, die über Vorgelegeachsen 8 dem Antreiben der Vorder- und Hinterräder 4, 5 dienen.

Das Chassis 2 ist durch eine Vielzahl einzelner Chassisteile, die insbesondere als Platten ausgebildet ist, gebildet. Gezeigt sind zum Chassis 2 eine horizontale untere Bodenplatte 9, senkrecht von dieser abgehende Vorderptatte 10 und Hinterplatte 11 im vorderen und hinteren Bereich des Chassis 2, sowie zwei parallel und in Abstand zueinander angeordnete, vertikal und in Längsrichtung des Stangenschleppers 1 orientierte plattenförmige Seitenwangen 12, die vom und hinten mit den Platten 10 und 11 verbunden sind. Die beiden Seitenwangen 12 sind zwischen den beiden Vorderrädern 4 und den beiden Hinterrädem 5 angeordnet. Wie am besten aus der Draufsicht des Stangenschleppers 1 zu sehen ist, wird dieser somit in der Breite etwa gedrittelt, wobei das mittlere Drittel des Stangenschleppers 1 im Bereich seines Chassis 2 zwischen den beiden Seitenwangen 12 gebildet ist.

Das Chassis 2 nimmt im Bereich der Hinterplatte 1 eine Aufnahme 13 zum Ankoppeln einer Stange als Verbindungsglied zwischen Stangenschlepper 1 und Bugfahrwerk eines Großraumflugzeuges auf. Vorne ist der Stangenschlepper 1 mit einer in der Vorderplatte 10 des Chassis 2 gelagerten Fahrerkabine 14 versehen. Auch vorne ist der Stangenschlepper 1 mit einer im Chassis 2 gelagerten Aufnahme 15 zum Ankoppeln einer Stange zum Schleppen des Flugzeuges versehen. Im hinteren Bereich des Chassis 2 ist in diesem ein Kraftstofftank 32 gelagert.

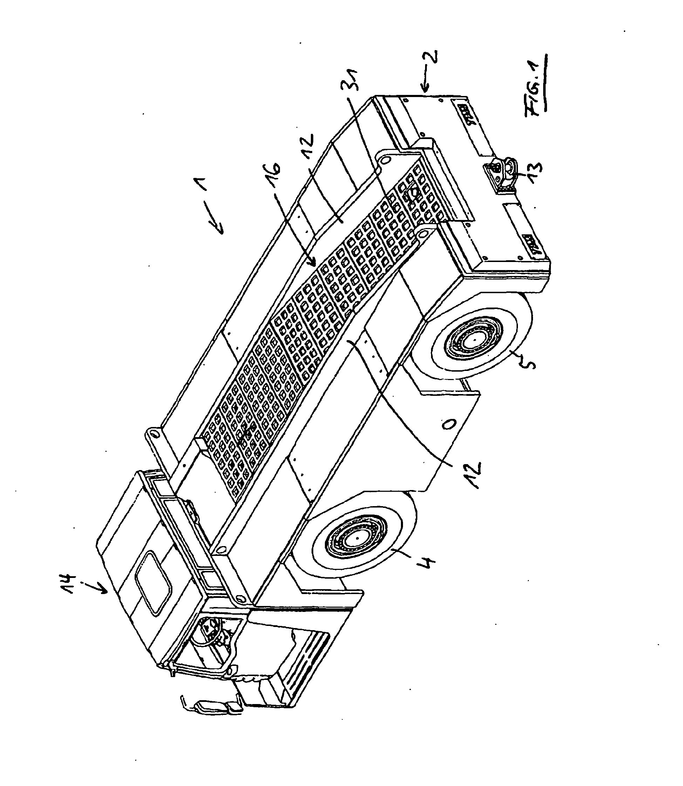

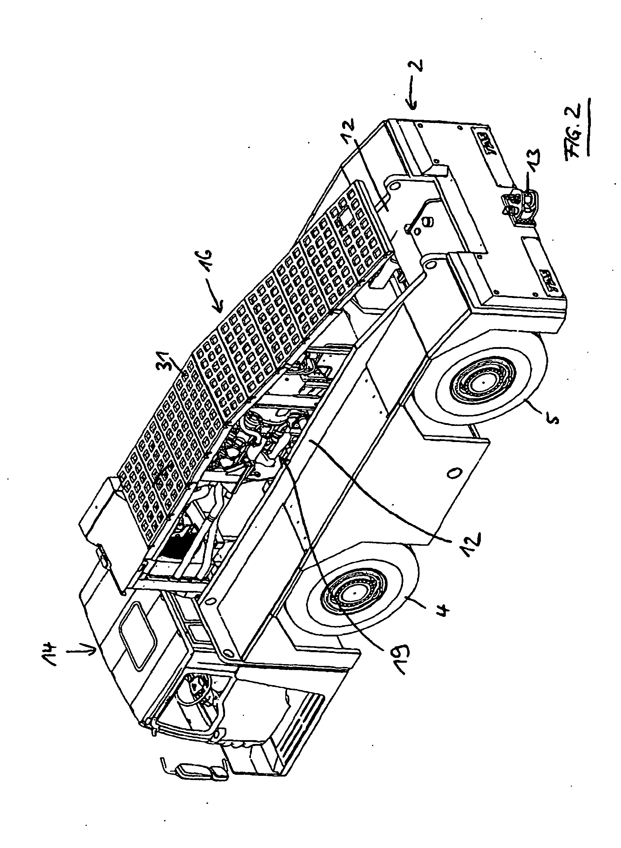

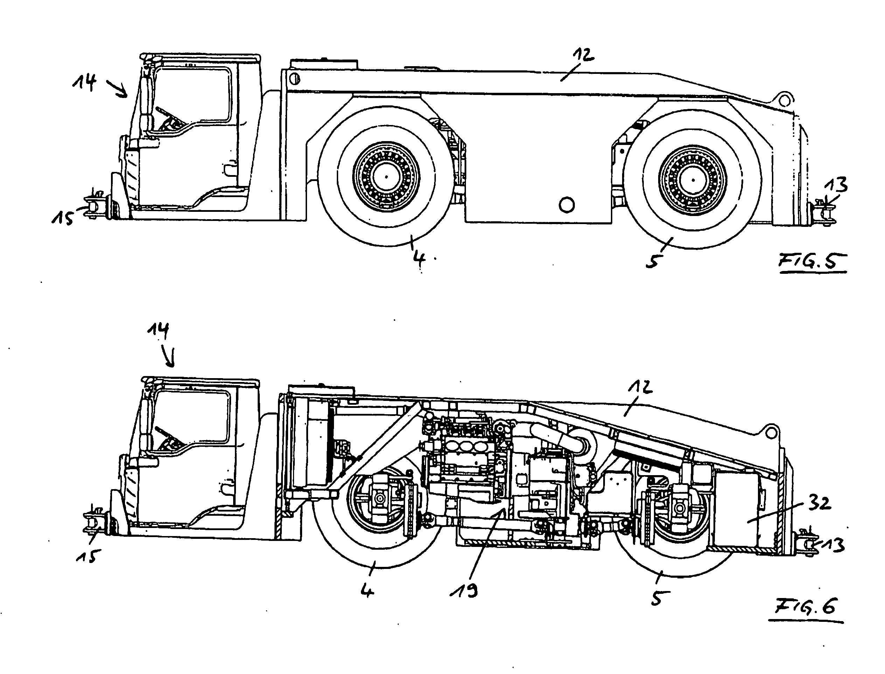

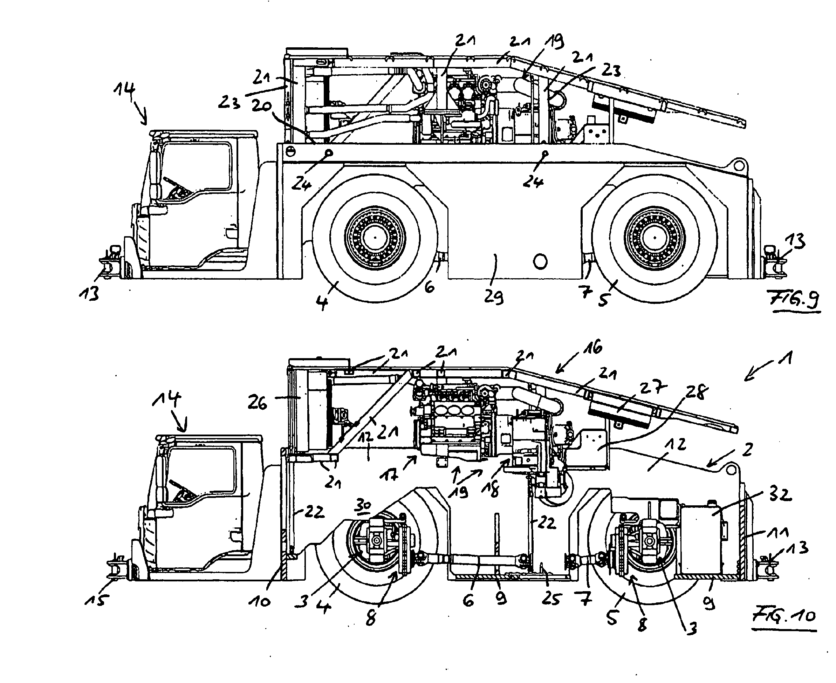

Der zwischen den beiden Seitenwangen 12 gebildete Raum dient der Aufnahme eines Hilfsrahmens 16, in dem als wesentliche Bauelement eine durch einen Motor 17 und ein Getriebe 18 gebildete Motor-Getriebe-Kombination 19 gelagert ist. Der Hilfsrahmen 16 ist bezüglich des Chassis 2 heb- und senkbar, aus einer beispielsweise in den Fig. 1, 5 und 6 gezeigten abgesenkten Stellung, in der die Motor-Getriebe-Kombination 19 zwischen den seitlichen Wangen 12 des Chassis 2 angeordnet ist und einer beispielsweise in den Fig. 2 und 10 veranschaulichten angehobenen Stellung, in der die Motor-Getriebe-Kombination 19 zumindest teilweise oberhalb des oberen Niveaus der seitlichen Wangen 12 des Chassis 2, verdeutlicht durch die obere Fläche 20 der einen Seitenwange 12, angeordnet ist.

Der Hilfsrahmen 16 ist durch Längs-, Quer- und Vertikalstreben gebildet, die mit der Bezugsziffer 21 bezeichnet sind. Heb- und senkbar ist der Hilfsrahmen 16 mittels drei Hydraulikzylindern, wobei ein Hydraulikzylinder vorne am Hilfsrahmen 16, mittig angreift und zwei weitere Hydraulikzylinder, von denen nur einer dargestellt ist, näher zur jeweiligen Seitenwange 12 positioniert ist und im hinteren Bereich des Hilfsrahmens 16 angreift. Vertikal geführt ist der Hilfsrahmen 16 in den beiden Seitenwangen 12 mittels Führungsschienen 23, die nur bezüglich des Hilfsrahmens 16 veranschaulicht sind. Um den Hilfsrahmen 16 in seiner vollständig angehobenen Position vertikal festzulegen, sind Arretiermittel im Chassis 2 gelagert. Diese sind nur zur Fig. 9 veranschaulicht. Es weist die jeweilige Seitenwange 12 vorne und hinten ein Loch 24 auf und es ist durch das jeweilige Loch 24, bei angehobenem Hilfsrahmen 16, ein Stift steckbar, der in eine nicht veranschaulichte fluchtende Lochaufnahme im Hilfsrahmen 16 eingreift.

Um beim Absenken des Hilfsrahmens 16 in seine vollständig absenkte Stellung eine exakte Positionierung von Hilfsrahmen 16 und Chassis 2, und somit von Motor-Getriebe-Kombination 19 zu erreichen, weist das Chassis 2 zumindest im Bereich der Bodenplatte 9 einen nach oben ragenden Zentrierstift 25 auf, der in ein korrespondierendes Loch an der Unterseite des Hilfsrahmens 16 eingreift und den Hilfsrahmen 6 in die zentrierte abgesenkte Endstellung bezüglich des Chassis 2 überführt.

Bei der gezeigten Ausführungsform dient der Hilfsrahmen 16 nicht nur der Lagerung der Motor-Getriebe-Kombination 19, sondem auch der Lagerung des Kühlers 26 des Motors 17, bei dem es sich insbesondere einen kolbengetriebenen Dieselmotor handelt, femer der Lagerung eines Kühlers 27 für das Getriebe 18 und eines Hydrauliktanks 28 zur Versorgung der Hydraulik Komponenten des Fahrzeugs mit Öl, beispielsweise einer hydropneumatischen Federung oder der Hydraulikzylinder.

Zum Überführen des Hilfsrahmens 16 und der in diesem gelagerten Aggregate von der vollständig abgesenkten Stellung des Hilfsrahmens 16 in seine vollständig angehobene Stellung, insbesondere zur Durchführung von Wartung, Reparatur oder Ersatz von Bauteilen dieser Aggregate ist es nur erforderlich, diejenigen Komponenten im Versorgungs- und Antriebsstrang des Fahrzeugs, die chassisseitig sind, von denjenigen des Hilfsrahmens 16 zu trennen, beispielsweise einen zwischen Vorderrad 4 und Hinterrad 5 angeordneten Luftfilter, der nicht veranschaulicht ist, sich aber unter den Abdeckplatten 29 befindet, die zwischen den Radkästen 30 von Vorder- und Hinterrad angeordnet sind. Femer sind die beiden Kardanwellen 6 und 7 vom Getriebe 18 zu lösen. Es kann dann der Hilfsrahmen 16 mit den von diesem aufgenommenen Komponenten angehoben werden. Da in aller Regel die Motor-Getriebe-Kombination 19 dann nicht mehr zum Antreiben der Hydraulik zum Beaufschlagen der Hydraulikzylinder 22, die das Heben des Hilfsrahmens 16 bewirken, zur Verfügung steht, ist es zweckmäßig, wenn die Hydraulikzylinder 22 in diesem Fall mittels eines fahrzeugeigenen, batteriebetriebenen Aggregats beaufschlagt werden. Es reicht somit aus, eine Hydraulikpumpe, die zur Beaufschlagung der hydraulischen Abnehmer vom Motor 17 üblicherweise angetrieben wird, nunmehr mittels des batteriebetriebenen Aggregats anzutreiben.

Nachdem der Hilfsrahmen 16 mit den von diesem aufgenommenen Aggregaten in die vollständig angehobene Position ausgefahren ist, können auch von der Seite und, nach dem Entfernen von den Hilfsrahmen 16 oben abdeckenden Abdeckgittem 31, die Aggregate einfach gewartet, repariert oder ausgetauscht werden. Diese Arbeiten beziehen sich zweckmäßig auf Bauteile, die im Fall einer größeren Wartung des Fahrzeuges zugänglich sein müssen. Komponenten des Fahrzeugs, die täglich gewartet werden müssen, sind sinnvollerweise so angeordnet, dass sie bei abgesenktem Hilfsrahmen 16 bereits zugänglich sind, beispielsweise ein Ölmessstab.

Nach Abschluss der Wartungsarbeiten wird der Hilfsrahmen geringfügig mittels der Hydraulikzylinder 21 angehoben und damit die Arretierstifte zum Fixieren des Hilfsrahmens 16 in seiner angehobenen Stellung entlastet, womit die Arretierstifte herausgezogen werden können und nunmehr das Absenken des Hilfsrahmens 16 mit den von diesen aufgenommenen Komponenten in die vollständig abgesenkte Position, bei Zentrierung mittels des Zentrierstifts 25 möglich ist. In dieser abgesenkten Stellung liegt der Hilfsrahmen 16 auf dem Chassis 2 auf und ist damit kippstabil im Chassis 2 gelagert. Die Erstreckung des Hilfsrahmens 16 ist so gewählt, dass dieser mit möglichst wenig Spiel bezüglich der beiden Seitenwangen 12 verfahrbar ist. Zusätzlich können Mittel zum Fixieren von Hilfsrahmen 16 und Chassis 2 bei abgesenkter Stellung des Hilfsrahmens 16 vorgesehen sein. Durch die beschriebene Lagerung des Hilfsrahmens 16 in dessen abgesenkter Stellung im Chassis 2 können Momente, die über die Motor-Getriebe-Kombination 19 in die Räder 4, 5 eingeleitet werden, ohne Weiteres zwischen dem Hilfsrahmen 16 und dem Chassis kompensiert werden.

## Patentansprüche

1. Flughafen-Vorfeldfahrzeug (1) zum Schleppen von Fahrzeugen, insbesondere Stangenschfepper (1) für Flugzeuge, mit einem Chassis (2), einer Motor-Getriebe-Kombination (19), im Bereich beider Seiten des Chassis (2) angeordneten Vorder- (4) und Hinterrädern (5), Radaufhängungen (3) für die Räder (4, 5) sowie einer am Chassis (2) befestigten Anhängevorrichtung (13, 15) für das zu schleppende Fahrzeug, **dadurch gekennzeichnet, dass** im Chassis (2) ein Hilfsrahmen (16) gelagert ist, in dem die Motor-Getriebe-Kombination (19) gelagert ist, wobei der Hilfsrahmen (16) bezüglich des Chassis (2) heb- und senkbar ist, aus einer abgesenkten Stellung, in der die Motor-Getriebe-Kombination (19) zwischen seitlichen Wangen (12) des Chassis (2) angeordnet ist, und einer angehobenen Stellung, in der die Motor-Getriebe-Kombination (19) teilweise oberhalb des oberen Niveaus (20) der seitlichen Wangen (12) des Chassis (2) angeordnet ist, wobei der Hilfsrahmen (16) in vertikal angeordneten Führungen (23) im Chassis (2) relativ zu diesem beweglich ist, zum Heben und Senken des Hilfsrahmens (16) zwischen einer vollständig abgesenkten und einer vollständig angehobenen Position.

2. Flughafen-Vorfeldfahrzeug nach Anspruch 1, **dadurch gekennzeichnet, dass** die Führungen (23) in vorderen und hinteren Bereichen des Hilfsrahmens (16) angeordnet sind.

3. Flughafen-Vorfeldfahrzeug nach einem der Ansprüche 1 oder 2, **dadurch gekennzeichnet, dass** Mittel (22) zum Heben und Senken des Hilfsrahmens (16) relativ zum Chassis (2) vorgesehen sind, die insbesondere als Hydraulikzylinder (22) ausgebildet sind.

4. Flughafen-Vorfeldfahrzeug nach einem der Ansprüche 1 bis 3, **dadurch gekennzeichnet, dass** die Mittel (22) zum Heben und Senken des Hilfsrahmens (16) mittels eines fahrzeugeigenen batteriebetriebenen Aggregats wirksam sind.

5. Flughafen-Vorfeldfahrzeug nach Anspruch 3 oder 4, **dadurch gekennzeichnet, dass** die Mittel (22) zum Heben und Senken des Hilfsrahmens (16) relativ zum Chassis (2) in vorderen und hinteren Bereichen des Hilfsrahmens (16) angeordnet sind, insbesondere vorne, in der Mitte des Hilfsrahmens (16) ein Mittel (22) und im hinteren Bereich, beidseitig des Hilfsrahmens (16) zwei Mittel (22) zum Heben und Senken des Hilfsrahmens (16) vorgesehen sind.

6. Flughafen-Vorfeldfahrzeug nach einem der Ansprüche 1 bis 5, **dadurch gekennzeichnet, dass** Arretiermittel (24) im Chassis (2) gelagert sind, die in angehobener Position des Hilfsrahmens (16) in Eingriff mit dem Hilfsrahmen (16) bringbar sind und diesen vertikal festlegen.

7. Flughafen-Vorfeldfahrzeug nach einem der Ansprüche 1 bis 6, **dadurch gekennzeichnet, dass** Zentriermittel (25) zum Zentrieren des Hilfsrahmens (16) beim Überführen des Hilfsrahmens (16) in dessen vollständig abgesenkte Position vorgesehen sind, insbesondere im Chassis (2) oder im Hilfsrahmen (16) mindestens ein vertikal ausgerichteter Zentrierstift (25) gelagert ist, der beim Überführen des Hilfsrahmens (16) in dessen vollständig abgesenkte Position in eine Aufnahme für den Zentrierstift (25) im Hilfsrahmen (16) bzw. dem Chassis (2) eingreift.

8. Flughafen-Vorfeldfahrzeug nach einem der Ansprüche 1 bis 7, **dadurch gekennzeichnet, dass** der Hilfsrahmen (16) in seiner abgesenkten Stellung kippstabil im Chassis (2) gelagert ist.

9. Flughafen-Vorfeldfahrzeug nach einem der Ansprüche 1 bis 8, **dadurch gekennzeichnet, dass** Mittel zum Verbinden von Hilfsrahmen (16) und Chassis (2) in der abgesenkten Stellung des Hilfsrahmens (16) vorgesehen sind.

10. Flughafen-Vorfeldfahrzeug nach einem der Ansprüche 1 bis 9, **dadurch gekennzeichnet, dass** der Hilfsrahmen (16) durch Längs-, Quer- und Vertikalstreben (21) gebildet ist.

11. Flughafen-Vorfeldfahrzeug nach einem der Ansprüche 1 bis 10, **dadurch gekennzeichnet, dass** im Hilfsrahmen (16) zusätzlich eine Kühlvorrichtung (26) für den Motor (17) und/oder eine Kühlvorrichtung (27) für das Getriebe (18) und/oder ein Tank (28) für Hydrauliköl gelagert ist.

12. Flughafen-Vorfeldfahrzeug nach einem der Ansprüche 1 bis 11, **dadurch gekennzeichnet, dass** der Motor (17) eine Brennkraftmaschine, insbesondere ein Dieselmotor ist.

## Claims

1. Airport apron vehicle (1) for towing vehicles, in particular towbar tractor (1) for aeroplanes, with a chassis (2), an engine-gearbox combination (19), front wheels (4) and rear wheels (5) arranged in the region of both sides of the chassis (2), wheel suspension systems (3) for the wheels (4, 5) and a hitching device (13, 15) which is fastened to the chassis (2) and is intended for the vehicle which is to be towed, **characterized in that** an auxiliary frame (16), in which the engine-gearbox combination (19) is mounted, is mounted in the chassis (2), the auxiliary frame (16) being raiseable and lowerable with respect to the chassis (2), from a lowered position, in which the engine-gearbox combination (19) is arranged between lateral cheeks (12) of the chassis (2), and a raised position, in which the engine-gearbox combination (19) is partially arranged above the upper level (20) of the lateral cheeks (12) of the chassis (2), the auxiliary frame (16) being movable relative to the chassis (2) in guides (23) arranged vertically in said chassis (2), in order to raise and lower the auxiliary frame (16) between a completely lowered and a completely raised position.

2. Airport apron vehicle according to Claim 1, **characterized in that** the guides (23) are arranged in front and rear regions of the auxiliary frame (16).

3. Airport apron vehicle (1) according to either of Claims 1 and 2, **characterized in that** means (22) for raising and lowering the auxiliary frame (16) relative to the chassis (2) are provided, said means being designed in particular as hydraulic cylinders (22).

4. Airport apron vehicle according to one of Claims 1 to 3, **characterized in that** the means (22) for raising and lowering the auxiliary frame (16) are active by means of a battery-operated unit integral to the vehicle.

5. Airport apron vehicle according to Claim 3 or 4, **characterized in that** the means (22) for raising and lowering the auxiliary frame (16) relative to the chassis (2) are arranged in front and rear regions of the auxiliary frame (16), and, in particular, one means (22) for raising and lowering the auxiliary frame (16) is provided at the front, in the centre of the auxiliary frame (16), and two means (22) for raising and lowering the auxiliary frame (16) are provided in the rear region, on both sides of the auxiliary frame (16).

6. Airport apron vehicle according to one of Claims 1 to 5, **characterized in that** locking means (24) are mounted in the chassis (2), which locking means can be brought into engagement with the auxiliary frame (16) and fix the latter vertically, in the raised position of the auxiliary frame (16).

7. Airport apron vehicle according to one of Claims 1 to 6, **characterized in that** centring means (25) for centring the auxiliary frame (16) upon transfer of the auxiliary frame (16) into the completely lowered position thereof are provided, and, in particular at least one vertically aligned centring pin (25) is mounted in the chassis (2) or in the auxiliary frame (16), said centring pin (25) engaging in a receptacle for the centring pin (25) in the auxiliary frame (16) or in the chassis (2) upon transfer of the auxiliary frame (16) into the completely lowered position thereof.

8. Airport apron vehicle according to one of Claims 1 to 7, **characterized in that the** auxiliary frame (16), in the lowered position thereof, is mounted in a manner stable against tilting in the chassis (2).

9. Airport apron vehicle according to one of Claims 1 to 8, **characterized in that** means for connecting auxiliary frame (16) and chassis (2) in the lowered position of the auxiliary frame (16) are provided.

10. Airport apron vehicle according to one of Claims 1 to 9, **characterized in that** the auxiliary frame (16) is formed by longitudinal, transverse and vertical struts (21).

11. Airport apron vehicle according to one of Claims 1 to 10, **characterized in that** a cooling device (26) for the engine (17) and/or a cooling device (27) for the gearbox (18) and/or a tank (28) for hydraulic oil are/is mounted in the auxiliary frame (16).

12. Airport apron vehicle according to one of Claims 1 to 11, **characterized in that** the engine (17) is an internal combustion engine, in particular a diesel engine.

## Revendications

1. Véhicule de terrain d'atterrissage d'aéroport (1) pour remorquer des véhicules, notamment véhicule remorqueur à barre (1) pour avions, comprenant un châssis (2), une combinaison moteur-transmission (19), des roues avant (4) et arrière (5) disposées dans la région des deux côtés du châssis (2), des suspensions de roue (3) pour les roues (4, 5) ainsi qu'un dispositif d'accrochage (13, 15) fixé au châssis (2) pour le véhicule à remorquer, **caractérisé en ce qu'**un cadre auxiliaire (16) est monté dans le châssis (2), dans lequel est montée la combinaison moteur-transmission (19), le cadre auxiliaire (16) pouvant être soulevé et abaissé par rapport au châssis (2), depuis une position abaissée dans laquelle la combinaison moteur-transmission (19) est disposée entre des parois latérales (12) du châssis (2), et une position soulevée dans laquelle la combinaison moteur-transmission (19) est disposée partiellement au-dessus du niveau supérieur (20) des parois latérales (12) du châssis (2), le cadre auxiliaire (16) étant déplaçable dans des guides (23) disposés verticalement dans le châssis (2) par rapport à ce dernier, afin de soulever et d'abaisser le cadre auxiliaire (16) entre une position complètement abaissée et une position complètement soulevée.

2. Véhicule de terrain d'atterrissage d'aéroport selon la revendication 1, **caractérisé en ce que** les guides (23) sont disposés dans des régions avant et arrière du cadre auxiliaire (16).

3. Véhicule de terrain d'atterrissage d'aéroport selon l'une quelconque des revendications 1 ou 2, **caractérisé en ce que** des moyens (22) sont prévus pour soulever et abaisser le cadre auxiliaire (16) par rapport au châssis (2), lesquels sont réalisés notamment sous forme de vérins hydrauliques (22).

4. Véhicule de terrain d'atterrissage d'aéroport selon l'une quelconque des revendications 1 à 3, **caractérisé en ce que** les moyens (22) pour soulever et abaisser le cadre auxiliaire (16) sont actionnés au moyen d'un groupe propre au véhicule alimenté par batterie.

5. Véhicule de terrain d'atterrissage d'aéroport selon la revendication 3 ou 4, **caractérisé en ce que** les moyens (22) pour soulever et abaisser le cadre auxiliaire (16) par rapport au châssis (2) sont disposés dans des régions avant et arrière du cadre auxiliaire (16), un moyen (22) étant notamment prévu à l'avant, au centre du cadre auxiliaire (16), et deux moyens (22) étant prévus dans la région arrière, des deux côtés du cadre auxiliaire (16), pour soulever et abaisser le cadre auxiliaire (16).

6. Véhicule de terrain d'atterrissage d'aéroport selon l'une quelconque des revendications 1 à 5, **caractérisé en ce que** des moyens de blocage (24) sont montés dans le châssis (2), lesquels peuvent être amenés en prise avec le cadre auxiliaire (16) dans la position soulevée du cadre auxiliaire (16) et fixent ce dernier verticalement.

7. Véhicule de terrain d'atterrissage d'aéroport selon l'une quelconque des revendications 1 à 6, **caractérisé en ce que** des moyens de centrage (25) pour centrer le cadre auxiliaire (16) lors du transfert du cadre auxiliaire (16) dans sa position complètement abaissée sont prévus, notamment au moins une goupille de centrage (25) orientée verticalement est montée dans le châssis (2) ou dans le cadre auxiliaire (16), laquelle lors du transfert du cadre auxiliaire (16) dans sa position complètement abaissée, vient en prise dans un logement pour la goupille de centrage (25) dans le cadre auxiliaire (16) ou le châssis (2).

8. Véhicule de terrain d'atterrissage d'aéroport selon l'une quelconque des revendications 1 à 7, **caractérisé en ce que** le cadre auxiliaire (16) est monté dans sa position abaissée de manière stable vis-à-vis d'un basculement dans le châssis (2).

9. Véhicule de terrain d'atterrissage d'aéroport selon l'une quelconque des revendications 1 à 8, **caractérisé en ce que** des moyens sont prévus pour relier le cadre auxiliaire (16) et le châssis (2) dans la position abaissée du cadre auxiliaire (16).

10. Véhicule de terrain d'atterrissage d'aéroport selon l'une quelconque des revendications 1 à 9, **caractérisé en ce que** le cadre auxiliaire (16) est formé par des montants longitudinaux, transversaux et verticaux (21).

11. Véhicule de terrain d'atterrissage d'aéroport selon l'une quelconque des revendications 1 à 10, **caractérisé en ce que** dans le cadre auxiliaire (16) est en outre monté un dispositif de refroidissement (26) pour le moteur (17) et/ou un dispositif de refroidissement (27) pour la transmission (18) et/ou un réservoir (28) pour l'huile hydraulique.

12. Véhicule de terrain d'atterrissage d'aéroport selon l'une quelconque des revendications 1 à 11, **caractérisé en ce que** le moteur (17) est un moteur à combustion interne, notamment un moteur diesel.
